Europäisches Patentamt

European Patent Office

Office européen des brevets

(11) Publication number: 0 383 527
A1

# EUROPEAN PATENT APPLICATION

(21) Application number: 90301486.8

(22) Date of filing: 13.02.90

(51) Int. Cl.5: B01D 33/11, B01D 33/25,
B01D 33/27, B01D 33/327,
B01D 33/42

(30) Priority: 13.02.89 GB 8903142

(43) Date of publication of application:
22.08.90 Bulletin 90/34

(84) Designated Contracting States:
AT BE CH DE DK ES FR GB GR IT LI LU NL SE

(71) Applicant: Goddin, Jeremy Robert
Grove Farm, Bennetts Road North
Corley, Nr. Coventry CV7 8BG(GB)

(72) Inventor: Goddin, Jeremy Robert
Grove Farm, Bennetts Road North
Corley, Nr. Coventry CV7 8BG(GB)

(54) Self-cleaning filter.

(57) A self cleaning filter comprises a filter cylinder
(11) carried by support discs (12, 13) for rotation
about horizontal pipe (14) which serves as an axle.
Unfiltered water enters one end of pipe (14) and is
constrained by a disc (26) to pass through a slot (27)
onto vanes (19) also carried by the support discs.
Incoming water passes through the filter cylinder
leaving particles retained inside the cylinder which is
rotated by the incoming water impinging on the
vanes. These particles are discharged into recepta-
cle (30) communicating through aperture (28) down-
stream of the disc whereby the filtrate is discharged
from the other end of pipe (14). A second filter
cylinder (49) may be similarly mounted coaxially
outside the filter cylinder (11) for rotation in the
same manner, and provides a finer filtration, its fil-
trate being discharged through receptacle (50) and
the other end of pipe(14). The filtrate can be water-
borne dirt, blood or plankton.

FIG.9.

EP 0 383 527 A1

## SELF CLEANING LIQUID FILTER

This invention relates to a self cleaning filter for the removal of particles from a liquid. More particularly, but not exclusively, the invention is concerned with a self cleaning filter for improving the quality of a water supply, or a water discharge, by the removal of solid impurities.

The cleansing of natural water supplies is a subject to which mankind has devoted considerable effort and ingenuity for many, many years and more recently this subject has been extended by the perception that man-made effluents need similar attention to protect the environment.

Water supply undertakings commonly use extensive filter beds to remove sediments occurring in the water supply. Such filter beds are most carefully constructed using graded filtering sands and porous membranes. Over a period of time such filter beds become progressively clogged with sediment and have to be cleaned, either by physically removing the sediment, or by back-flushing in which event the sediment is again returned to a natural water course. In order to minimise such clogging, large sedimentation tanks are sometimes used to induce settlement of suspended solids thereby reducing the sediment load of the filter bed to the finest sediments. Such systems require the availability of a very large site, very substantial capital investment, and substantial running costs.

Similarly, sewage effluent, and the effluent from some industries contain substantial proportions of solid matter which must be removed before the remaining liquid can be treated to reduce its otherwise adverse effects on the environment.

Recently this general subject has been expanded by the requirements of the new Fish Farming Industry which is interested both in obtaining the cleanest possible water supply and in adopting a responsible environmental policy by removing uneaten food and fish faeces from their used water. In so far as their water supply is concerned, there is a need to prevent the ingestion of larger solid articles such as loose weeds and, with fresh water fish farms, the ever more pressing need to remove water-borne silt, particularly when the water is supplied from a river in flood. Fresh water fish farms are particularly concerned by the quality of their used water for two reasons. The first reason is environmental, as an unfiltered water discharge will carry waste products back into the water course which will then become polluted making the fish farm a "bad neighbour" and moreover causing both a reduction in the working environment of the fish farm personnel and the danger that any wild fish in the water course may suffer ill health and then move upstream so that any consequent disease organisms or parasites will be introduced, through the water supply to the farmed fish. The second reason is economic as it is becoming attractive for some fish farmers to use water recirculation to increase their water supply, particularly during low natural water supply conditions, thereby increasing the productivity of their farm. Such recirculation necessitates the most careful removal of solids before the water is treated by biological filters and re-oxygenated for re-use.

Additionally there has been a growing awareness that a very significant proportion of the world's population suffers from a wide range of diseases and health disorders through drinking or, otherwise using untreated fresh water supplies and that these problems are made worse by their inability to treat their sewage effluent before it is returned to the water course.

There is therefore a pressing need for equipment which will cleanse either water supplies or discharges without incurring the cost of major capital works.

On such piece of equipment is the machine devise by Hydrotech AB of Malmo in Sweden and marketed by them under their trade mark TRIANGLEFILTER. In this equipment the water flow is constrained to flow over one or two slightly inclined filter screens made from finely woven stainless steel wire. As the water flows over the screens it progressively flows through the gaps in the weave and any particles larger than these gaps are retained by the screen. The larger particles are progressively moved across the screen by the water flow and form a rough line of detritus along the screen adjacent to the position where the water flow finally passes through the wire mesh. An electrically driven pump is used to produce water sprays for moving the gathered detritus off the screens into a waste gully. Due to the length of the screens, these water sprays are mounted on slides so that they can be traversed along the screens from time to time. These sprays are arranged in two groups, one spraying down towards the upper surface of the screen and the other spraying upwards through the screens to try to dislodge any particles sticking in the wire mesh of the screens. The screens are available with different mesh sizes ranging from 30 to 100 microns. The flow through the filter is dependant on the size of the equipment, the mesh size of the filter screens, and the proportion of the sediment to be removed, the largest machine being quoted as having a flow of between 12 and 50 litres per second with 30 micron filter screens and up to between 50 and 80 litres per second with the 100 micron filter screen.

This equipment therefore is capable of substantial flow rates for its size and has the advantages of being self-cleaning and of being readily adaptable to different working conditions by using filter screens of different mesh sizes. However, the variation in the quoted flow rates for each mesh size indicates that its performance can vary quite substantially and it is understood that small particles slightly larger than the mesh size tend to lodge in the screen and be held in position by the water flow. Although the equipment is compact, easy to operate and cost-effective, when compared with the use of filter beds to take a comparable flow. However, it is quite costly and may be unsuitable for most Third World applications as it essentially needs an electrical supply and sophisticated servicing.

Another such piece of equipment is the machine devised by Unik Filtersystem A/S of Norway and marketed by them under their trademark UNIK. In this equipment the water is constrained to flow through two circular discs made of finely woven stainless steel wire supported by a grooved rim which is driven by a belt from an electrical motor. As the discs rotate about their joint horizontal axis with the water level not higher than this axis, all dirt adhering to them is carried vertically out of the water and then moves with the discs until it nearly reaches the water surface again. At this point the dirt is washed off into respective gently sloping drains positioned almost radially of the discs and above the water level, water sprays being squirted horizontally through each disc to wash the dirt off. The performance of this equipment is limited by the diameter of the discs and the essential feature that less than half of the disc is effective at any time. The cutting of the discs also entails substantial waste of the costly stainless steel wire mesh and there is, of course, the problem of sealing the periphery of each disc under water to prevent leakage of dirt past the rim into the filtered water. This problem appears to be greater if the dirt is at all abrasive as it could possible damage the sealing surfaces. Furthermore, the discs must move the dirt vertically out of the water and this will only occur if the dirt is firmly adhered to the wire fabric. In the case of uneaten fish food, this will most probably merely accumulate upstream of the discs and eventually cause a complete blockage.

According to the invention, a self-cleaning filter, for the removal of particles from a liquid, includes a filter drum of which at least part of its peripheral surface is formed from sheet filtration material, the filter drum is mounted for rotation about its axis which is substantially horizontal, a duct for introducing the unfiltered liquid into the drum whereby the liquid will be filtered through the sheet filtration material leaving the particles retained within the drum, means for causing the drum to rotate about its axis, and means for removing the particles from the interior of the drum.

The filter drum may be cylindrical and have its cylindrical surface formed either from a piece of the sheet filtration material curved into a cylinder, or from a plurality of part cylindrical segments. In the case where a piece of the filtration material has been curved into a cylinder, the open ends of the cylinder are preferably sealed to respective support discs. Such seals may be means of a compressible seal or by a frusto-conical surface of each disc engaging within the cylinder, the discs being movable axially towards each other to press their frusto-conical surfaces tightly into the ends of the cylinder. The duct for introducing the unfiltered liquid may be a pipe which is coaxial with the axis of rotation of the filter drum. In this event one or both of the support discs may be mounted for rotation about this pipe.

The filter drum may alternatively be of polygonal cross-section and have its polygonal surfaces formed from the filtration material. Preferably the polygonal filter drum comprises a frame extending between respective end plates which are mounted to permit rotation of the filter drum, and each polygonal surface is formed from a piece of the filtration material.

The means for causing the filter drum to rotate may be any convenient form of external power source such as an electric motor. However, the means for causing the filter drum to rotate is preferably a device operated by the movement of the liquid. Such a device may be any form of water wheel or turbine connected to drive the filter drum either directly or indirectly. Preferably the device comprises a series of spaced vanes mounted inside the filter drum and riven by the incoming unfiltered water. These vanes may be formed as buckets or as divisions extending longitudinally of the filter drum.

The means for removing the particles from the interior of the drum may be a receptacle into which the particles are to fall as the filtration drum rotates. Preferably a spray of the filtered liquid is directed on the outer periphery of the filter drum to clean the particles into the receptacle. The receptacle is preferably arranged to deliver the particles and the portion of the spray passing into the filter drum into a drainage duct which is coaxial with the duct conveying the unfiltered water into the filter drum. Preferably both ducts are formed from the same piece of pipe on which the filter drum is supported for rotation, the interior of the pipe being suitably blocked to prevent the unfiltered water passing directly through the pipe to the portion defining the drainage duct.

The series of spaced vanes may be fixed in position within the filter drum or may be mounted so that their angular position relative to the incoming unfiltered liquid may be adjusted.

The series of spaced vanes may divide the interior of the filter drum into a series of longitudinal chambers each of which is bounded by the filtration material. In such a case the angular positions of the vanes are selected whereby the particles in each chamber will not be able to flow out of it until the chamber is registered with the receptacle.

A second filter drum, larger that the first, may be positioned coaxially around the first filter drum for joint rotation, the second filter drum being of finer porosity than the first and having means for removing the particles retained within the second filter drum. Such means for removing the particles can be similar to that utilized by the first filter drum and may discharge into the same drainage duct.

The invention will now be described, by way of example only, with reference to accompanying drawing, in which:-

Figure 1 is a side elevation of a cylindrical filter drum;

Figure 2 is a vertical section through the filter drum of Figure 1;

Figure 3 is an enlarged detail of part of Figure 2;

Figure 4 is a transverse section taken on the line 3-3 of Figure 2;

Figure 5 is a side elevation of the pipe shown in Figure 2, but viewed from the opposite side;

Figure 6 is a transverse section of Figure 5 taken on the line 6-6;

Figure 7 is a transverse section, similar to Figure 4, but showing one arrangement for a polygonal filter drum;

Figure 8 is a transverse cross-section, similar to Figure 7, but showing a modified construction, and

Figure 9 is a vertical section, similar to Figure 2, but showing the use of two concentric cylindrical filter screens

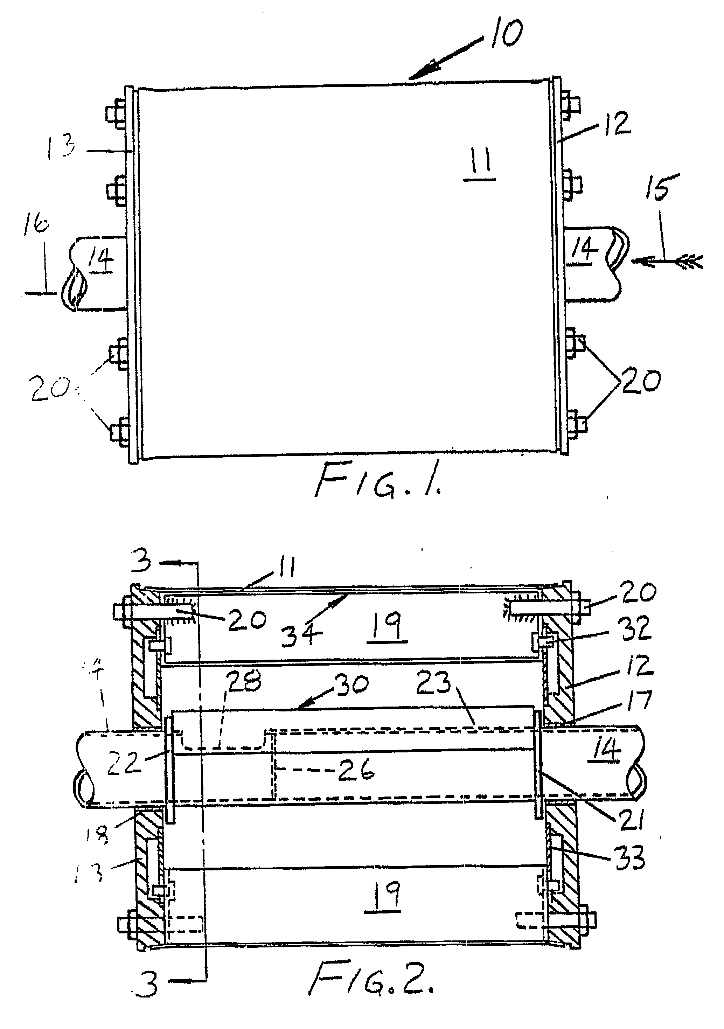

With reference to the embodiment illustrated in Figures 1 - 6, a cylindrical filter drum 10 comprises a cylinder of sheet filtration material 11 carried by a pair of support discs 12 and 13 that are mounted on a pipe 14 of which the right-hand end, as seen in Figure 1, defines a duct for the admission of unfiltered water as indicated by the arrow 15. The left-hand end of the pipe 14 constitutes a drainage duct for the particles removed by the filter drum 11 as indicated by the arrow 16. The support discs 12, 13 are journalled on the pipe 14 by respective PTFE journal bearings 17 and 18 as shown in Figure 2. The outer rims of the support discs 12, 13 are provided with opposed frusto-conical surfaces which fit into the open ends of the filter cylinder 11. The support discs 12, 13 are spaced apart by a series of spaced vanes 19 which are provided with aligned threaded studs 20 that pass through the support discs 12, 13 and are locked in position by the nuts shown. As these nuts are tightened, the support discs 12, 13 are drawn axially towards each other thereby pressing their frusto-conical surfaces into sealing engagement with the interior of the filter cylinder 11. The filter cylinder 11 is preferably made from a metal wire cloth, stainless steel wire cloth being preferred. The latter is available in a variety of weaves including square mesh weave, dutch twilled weave, single plain dutch weave, reverse plain dutch weave and twilled reverse dutch weave. By selecting the appropriate type of weave and the diameter of the wires used, it is possible to select a material which has partical retention varying from 8 microns upwards. For instance, a reverse plain dutch weave having a mesh of 130 x 35 will give a retention of 80 microns, a similar weave 175 x 50 will retain 60 microns, a similar weave of 290 x 75 will retain 40 microns and one of 600 x 100 will retain 25 microns. With dutch twilled weave a mesh of 120 x 400 will retain 50 microns, a mesh of 120 x 600 will retain 40 microns, a mesh of 200 x 600 will retain 32 microns, and a mesh of 165 x 800 will retain 28 microns. The same weave is available down to a mesh of 325 x 2300 which will retain 8 microns but this material is rather flimsy and would need to be supported by a backing of coarser weave. Instead of using woven stainless steel wire, various other types of woven or knitted filter cloth may be used and there is also the possibility of using finely perforated plastic sheet.

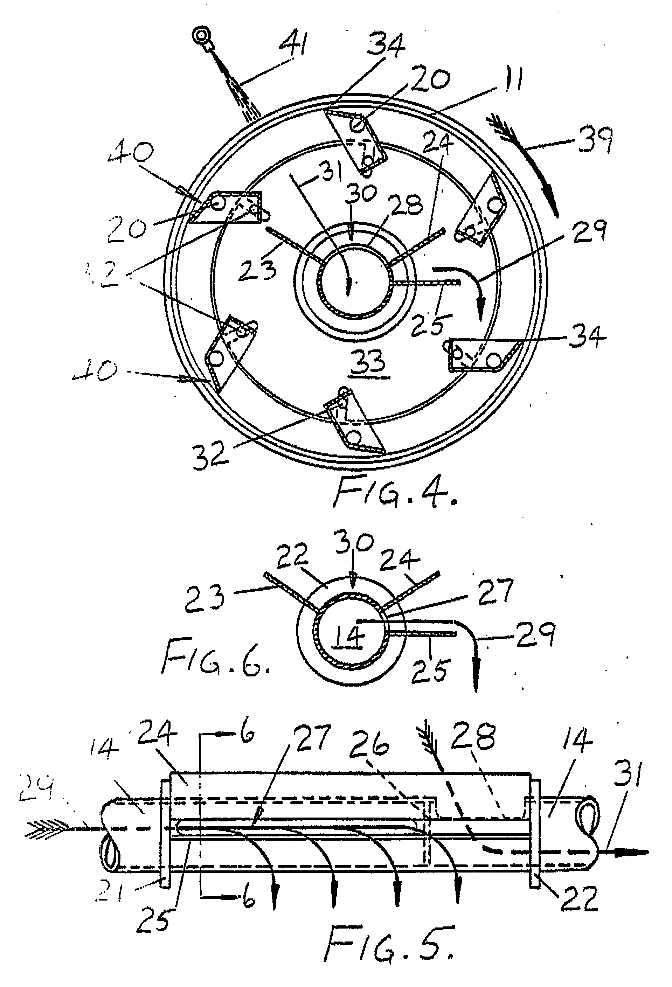

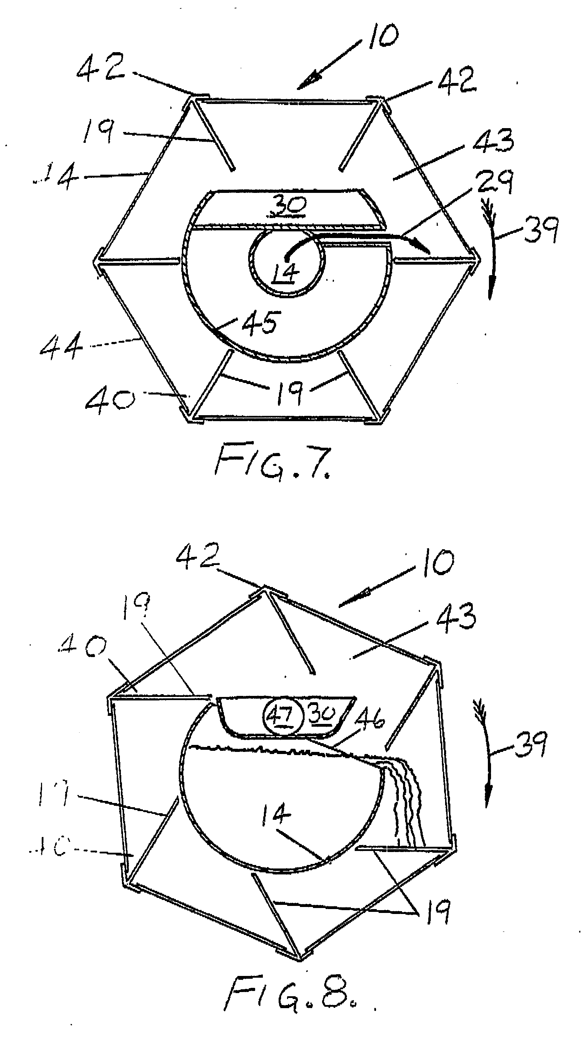

The pipe 14 has a pair of thrust washers 21 and 22 secured to it at a spacing very slightly less than the assembled positions of the support discs 12 and 13. With particular reference to Figures 2, 4, 5 and 6, it will be noted that there are 3 longitudinal webs 23, 24 and 25 which are sealingly secured between the inwardly opposing faces of the thrust washers 21 and 22, and are also sealingly secured to the exterior of the pipe 14. When the pipe 14, the thrust washers 21 and 22, and the longitudinal webs 23, 24 and 25 are made from a plastic such as ABS, they are preferably secured together by solvent welding or alternatively by using a hot air welder. Between its ends, the pipe is blocked by a welded disc 26 and is formed with a slot 27 along one side and an aperture 28 in its upper surface but on the opposite side of the disc 26. As will best be seen from Figure 5 and 6, the slot 27 is positioned between the webs 24 and 25 and serves to admit the unfiltered water, as indicated by arrow 29, into the filter drum 11. The longitudinal webs 23 and 24, together with the thrust washers 21 and 22, form a receptacle which is indicated generally by arrow 30. The receptacle 30 extends along the entire upper length of the pipe 14 within the filter drum 11 and communicates through the aperture 28 with the interior of the pipe 14 so that all particles and water received by the receptacle 30 will pass into the pipe 14 as shown by the arrow 31 in Figures 4 and 5.

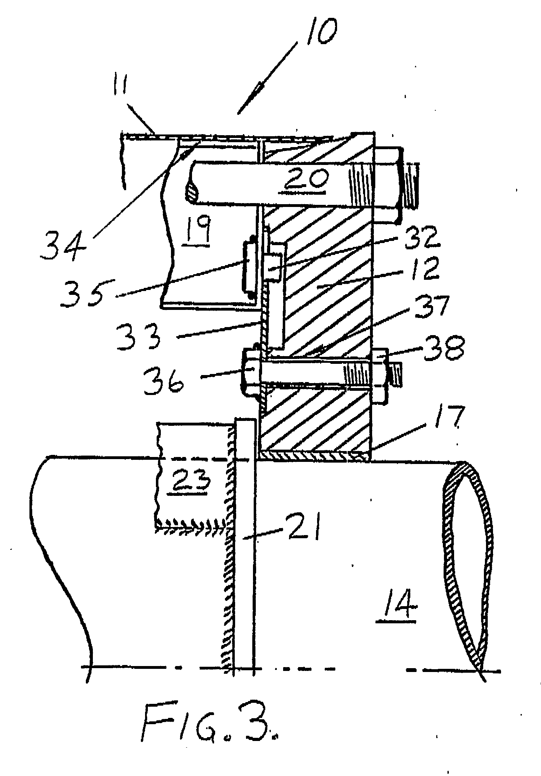

With particular reference to Figure 4, it will be noted that there are six vanes 19 arranged between the end plates 12 and 13, and that these vanes are equi-angularly spaced and in the form of buckets as shown. Each of the vanes 19 is pivoted about its studs 20 for limited angular movement which is controlled by pins 32 which engage respective slots in a star wheel 33. In this manner, slight relative rotation between the star wheel 33 and the respective support disc 12 or 13 will cause the vanes 19 to pivot until their leading edges 34 gently engage the internal surface of the filter cylinder 11. Thus, the vanes 19 divide the interior of the filter drum 11 into a series of longitudinal chambers each of which is bounded by the filtration material. The mounting of the star wheel 33 may be seen more clearly in Figure 3, from which it will be noted that the pins 32 have heads 35 which are tack welded inside the ends of the buckets formed by the vanes 19. Also that a bolt 36 extends through the star wheel 33 to which its head is also secured by tack welding. The shank of the bolt 36 extends through an arcuate slot 37 in the support disc 12 and is provided with a locking nut 38. A similar star wheel is mounted from the support disc 13 and would also be provided with a bolt 36 and locking nut 38. In this manner, the vanes 19 can be rotated so that their leading edges 34 move inwards from the position shown in Figure 4, thereby facilitating assembly of the filter cylinder 11 on the support discs 12 and 13. Once the filter cylinder 11 has been so assembled, the bolts 36 are moved along their arcuate slots 37 until the leading edges 34 of the vanes 19 engage the inner surface of the filter cylinder 11.

The operation of the filter is best seen from Figures 4 and 5 from which it will be noted that the incoming unfiltered water flows from the interior of the pipe 14, through the slot 27, and then flows over the horizontal surface of the longitudinal web 25 to drop into whichever bucket is in position. Thus, the incoming water causes the filter drum to rotate in the direction of the arrow 39 in Figure 4. As the filter drum rotates, the water within the filter cylinder 11 percolates outwards whilst retaining the particles inside the drum. It should be noted that rotation of the filter drum causes the buckets formed by the vanes 19 to tip progressively whereby, as the buckets are drawn upwards away from the water surface, any fluid dirt will be caught in the traps 40. As the filter drum passes over the top of its rotation a water spray 41 is squirted onto its exterior, thereby washing any particles adhering to the interior of the filtration material downwards as indicated by arrow 31. Furthermore, as the vanes 19 pass the position of the water spray 41, the traps 40 are washed out by the spray so that the dirt trapped there is also conveyed into the receptacle 30. If desired, several arrays of water sprays may be positioned over the upper surface of the drum.

In some applications it may be desirable to have the equipment operating without electrical supply and, in this case, the rotation of the filter cylinder 11 caused by the incoming water 29 can be harnessed to drive a small pump to produce the water spray 41 from clean water that has passed through the filtration material 11. On the other hand, there will be applications in which it is desirable for the water spray to be created by a separate pump, probably driven by an electric motor, and it may also be attractive for some purposes to have the filter drum 10 continually rotated at a predetermined speed by an electric motor, for instance by using a belt drive passing over the periphery of one of the support discs 12 or 13. In the case where the dirt to be removed is greasy or sticky, provision may also be made for occasionally spraying the upper surface of the filter drum with heated water or even, in some circumstances, with steam.

As shown in Figures 7 and 8, the filter drum 10 may be of polygonal cross-section. In the instance shown it is hexagonal. The hexagonal filter drum comprises a frame 42 extending between respective end plates 43 (of which only one is shown). The frame 42 is also arranged to define the vanes 19, and to support a sheet of the filtration material 44 between each adjacent pair of vanes 19, thereby dividing the interior of the filter drum into a series of longitudinal chambers each of which is bounded by the filtration material 44. It should particularly be noted that the pipe 14 is surrounded by a part-cylindrical shroud 45 to leave only a slight working clearance between the inner ends of the vanes 19 and the shroud 45. In this manner, the incoming water is closely confined within its respective longitudinal chamber and the bulk of it can only escape through the corresponding sheet of filtration material 44. As the filter drum 10 rotates, the angle of the filtration sheet 44 changes so that any remaining unfiltered water is first spread horizontally (that is when it reaches the position of the lower longitudinal chamber), and is then progressively tipped back over the filtration material. In this manner, the filtered dirt tends to be distributed evenly over each sheet of filtration material and will then be discharged into the receptacle 30 as the filtration sheets 44 pass unshown water sprays arranged over the filter drum 10

The arrangement shown in Figure 8 is similar to that of Figure 7 except in so far as the diameter of the pipe 14 has been substantialy increased so that its outer periphery performs the function of the shroud 45 in Figure 7. The upper surface of the pipe 14 has been cut away diagonaly as indicated at 46. So that the incoming water will fall out of the right-hand side of the pipe 14 onto the vanes 19 as they pass. With this arrangement the pipe 14 would again need to have a disc, such as the disc 26 used in the first embodiment, and its receptacle 30 would drain through a pipe 47 into the far end of the pipe 14 beyond that separation disc. From Figure 8 it will particularly be noted that the vanes 19 are angled forward in the direction of rotation thereby increasing both the effectiveness of rotation and also maintaining the vanes below the horizontal until they are aligned with the receptacle 30. In this manner, any slushy dirt held in the trap 40 will be tipped directly into the receptacle 30.

If desired, various different forms of bucket shape can be used and, in the case where the filter drum is to be rotated by an external source, the vanes 19 can be made considerably smaller so that their sole function is to stop the filtered dirt from running any further down the cylindrical surface until the vanes are in a position to dump such loose dirt into the receptacle 30.

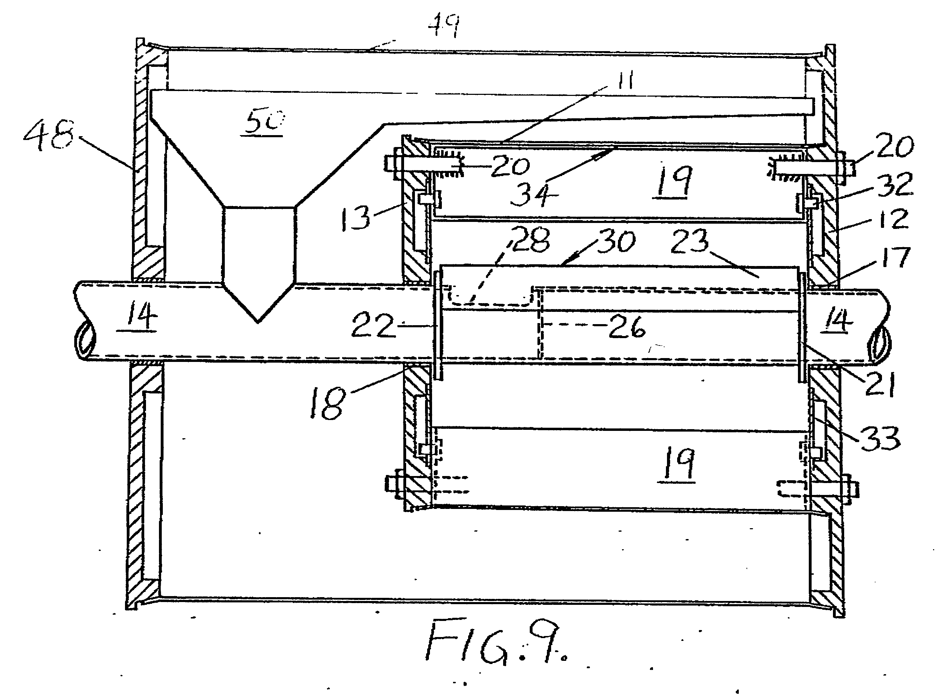

With referecne to Figure 9, the same reference numerals have been used as in Figure 2 and it will be noted that the entire construction shown in Figure 2 is incorporated in the right-hand end of Figure 9. The main points of difference are that a third support disc 48 has been provided and defines a frusto-conical surface at a greater radius that that defined by the support disc 13, and also the support disc 12 has been extended radially to provide a second frusto-conical surface opposed to that of the third support disc 48. In this manner, a second filter cylinder 49 is supported on the outer frusto-conical surfaces and has a mesh which is finer than the smaller diameter filter cylinder 11. A second receptacle 50 extends the full length of the apparatus and has its ends extending into recesses formed in the support discs 12 and 48 to ensure that all particles washed off the second cylindrical filter cylinder are caught and returned into the drain provided by the left hand end of the pipe 14. The water sprays for the two filter cylinders 11 and 49 have not been shown. However, the water sprays for the outer cylinder 49 would be the same as already described whilst the water sprays for the inner cylinder 11 would be supported from the base of the receptacle 50 and be supplied through a water supply pipe which passes out of the filter drum through the left hand portion of the pipe 14.

The apparatus shown in Figure 9 enables the water to be filtered in two stages by the same equipment. Thus, if equipment was to be used to filter out all particles above 40 microns, the inner filter cylinder 11 could be used to filter out particles of up to, say 80 microns, the second filter cylinder 49 being used solely to separate the finer particles.

It will be noted that the constructions described have the advantage that the filter cylinders are continuously cleaned by a water spray which always tends to push the particles back out of the filtration material thereby facilitating the cleaning operation, and that this cleaning operation is carried out whilst the portion of the filter material being cleaned is inoperative. In this manner, all particles adhering to the inside of the filter cylinder will be cleaned off before the filtration material is re-used, and the vanes 19 serve to confine any sludge or non-adhering particles that may otherwise tend to slide back along the inside of the cylinder as the filtration material approaches the vertical. Sealing problems are also minimised by the small diameters of the bearings 17 and 18 which are protected by the thrust washers 21 and 22 internally and, furthermore, are normally positioned well above the water level. The costly stainless steel wire mesh is cut in strips which are rectangular thereby avoiding the waste incurred by cutting discs out of the material. Furthermore, the capacity of the filter drums can readily be altered by either varying the length of the filter cylinder or by varying its diameter.

Various manipulations of the design are clearly possible, including the arrangement of a third filter cylinder coaxially of the filter cylinders 11 and 49 shown in Figure 9. Also the construction of the drums can be varied and, in particular, a modular construction could be used in which the vanes 19 and their associated sheets of filtration material 44 are made as units which are then assembled onto support discs 12 and 13 or end plates 43 to form a completed filter drum. In addition to filtering suspended solids from a water supply or discharge, the self cleaning filter may be used for other purposes. In particular it may be used for separating creatures, such as plankton, from water. With appropriate meshes of filter material it may also be used for separating blood from water.

## Claims

1. A self-cleaning filter, for the removal of particles from a liquid, including a filter drum of which at least part of its peripheral surface is formed from sheet filtration material, the filter drum is mounted for rotation about its axis which is substantially horizontal, a duct for introducing the unfiltered liquid into the drum whereby the liquid will be filtered through the sheet filtration material leaving the particles retained within the drum, means for causing the drum to rotate bout its axis and means for removing the particles from the interior of the drum.

2. A filter according to Claim 1, in which the means for causing rotation of the drum is a device operable by the movement of the liquid entering the drum.

3. A filter according to Claim 2, in which the device comprises a series of spaced vanes mounted inside the filter drum and driven by the incoming unfiltered water.

4. A filter, according to any preceding Claim, in which the filter drum is cylindrical and has its cylindrical surface formed from a piece of the sheet filtration material curved into a cylinder, and the open ends of the cylinder are sealed to respective support discs which each define a frusto-conical surface engaging within the cylinder, the discs being relatively movable axially towards each other to press their frusto-conical surfaces tightly into the ends of the cylinder.

5. A filter, according to any preceding Claim, in which the filter drum is of polygonal cross-section and has its polygonal surfaces formed from the filtration material which is supported by a frame extending between respective support plates.

6. A filter, according to any preceding Claim, in which the duct for introducing the unfiltered liquid into the drum is a pipe which is coaxial with the axis of rotation of the filter drum, which is mounted for rotation about this pipe.

7. A filter, according to any preceding Claim, in which the means for removing the particles from the interior of the drum is a receptacle into which the particles are to fall as the filtration drum rotates, and the receptacle is arranged to deliver the particles into a drainage duct which is coaxial with the duct conveying the unfiltered water into the filter drum.

8. A filter, according to Claim 7, in which both ducts are formed from the same piece of pipe on which the filter drum is supported for rotation, the interior of the pipe being suitably blocked to prevent the unfiltered water passing directly through the pipe to the portion defining the drainage duct.

9. A filter according to any preceding Claim, in which a series of spaced vanes divide the interior of the filter drum into a series of longitudinal chambers each of which ims bounded by the filtration material, the angular positions of the vanes being selected whereby the particles in each chamber will not be able to fall or flow out of it until the chamber is registered with the receptacle.

10. A filter according to any preceding Claim, in which a second filter drum, larger than the first filter drum, is positioned coaxially around the first filter drum for joint rotation, the second filter drum being of finer porosity than the first and having means for removing the particles retained within the second filter drum.

10

12

11

13

15

16

14

14

20

20

FIG. 1.

3

11

20

20

34

19

4

28

30

23

32

12

17

22

26

14

18

21

13

33

19

3

FIG. 2.

FIG. 3.

FIG.4.

FIG.6.

FIG.5.

FIG.7.

FIG.8.

FIG.9.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-1 008 617 (I. WALLQUIST) <br> * Page 1, lines 65-90; page 2, lines 1-11 * | 1,6,7,8 | B 01 D  33/11 <br> B 01 D  33/25 <br> B 01 D  33/27 <br> B 01 D  33/327 <br> B 01 D  33/42 |
| X | LU-A-  79 466 (SIDMAR) <br> * Page 6, paragraphs 2,3,4 * | 1,6,7,8 | |
| X | DE-A-3 109 947 (ALFA LAVAL) <br> * Page 15, lines 12-15; page 16, lines 1-18; page 17, lines 1-10; page 20, lines 1-90 * | 1,7 | |
| X | GB-A-  874 594 (HARTLEYS LTD) <br> * Page 1, lines 37-70 * | 1,6,7 | |
| X | US-A-1 712 258 (J.D. COMPAIN) <br> * Page 2, lines 40-52 * | 1 | |
| X | US-A-2 147 088 (J.H. CARSON) <br> * Page 1, left-hand column, lines 26-29; page 1, right-hand column, lines 1-19,36-54 * | 1,2,3,5,9 | TECHNICAL FIELDS SEARCHED (Int. Cl.5) |
| X | EP-A-0 267 149 (W. NILL) <br> * Column 3, lines 5-60 * | 1,2,3 | B 01 D |
| X | FR-A-2 444 489 (V. STENGELIN) <br> * Page 2, lines 18-25; page 4, lines 14-38 * | 1,5,6,7 | |
| X | AT-A-  376 582 (H. WILDBURGER) <br> * Page 2, lines 14-53; page 3, lines 1-9 * | 1,4,6,7 | |
| X | US-A-1 504 020 (F.W. BRACKETT) <br> * Page 1, lines 43-110; page 2, lines 1-7 * | 1,10 | |

The present search report has been drawn up for all claims

| Place of search | Date of completion of the search | Examiner |
|---|---|---|
| THE HAGUE | 17-05-1990 | KERRES P.M.G. |

EPO FORM 1503 03.82 (P0401)